# EUROPEAN PATENT APPLICATION

(11) **EP 3 241 926 A1**
(43) Date of publication of application: **08.11.2017**
(21) Application number: 17169937.4
(22) Date of filing: 08.05.2017
(51) Int. Cl.: C23C 24/10, C03C 8/14, C03C 8/20, B82Y 30/00

(54) **COMPOSITION FOR COATING METAL SURFACES**

(30) Priority: 06.05.2016 IT UA20163229
(71) Applicant: Angelo Po Grandi Cucine - Societa' per Azioni, 41012 Carpi (MO) (IT)
(72) Inventor: CAPRIGLIONE, Gerardo, 41012 Carpi (MO) (IT); REGUZZONI, Marco, 41012 Carpi (MO) (IT)
(74) Representative: Crugnola, Pietro

(57) **Abstract**

A product for coating metal surfaces, in particular of a grid for cooking foodstuffs or of a support for cooking receptacles, comprises a glaze for metal surfaces and an additive of said glaze consisting of a water dispersion of nanoparticles of at least one metal oxide.

## Description

The present invention relates to a product that is usable for coating metal surfaces, in particular for coating the surface of a metal grid intended for direct cooking of foodstuffs, or the surface of supports for cooking receptacles, normally combined with the rings of a gas cooker.

The grids for direct cooking of foodstuffs and the supports for cooking receptacles are made of cast iron that is subsequently glazed.

Glazing mainly serves to protect from corrosion the metal structure of the grid, or of the supports. As, nevertheless, during cooking of foodstuffs, residues of organic substances coming from the aforesaid foodstuffs tend to stick, also persistently, to the surface of the grid, frequent cleaning operations are necessary, during which the aforesaid residues of organic substances have to be removed from the surface of the grid, using, for example, brushes that can also be abrasive brushes or with metal bristles. Also for supports for cooking receptacles, residues of organic substances coming from the cooking receptacles can get deposited on the supports and stick persistently to the supports, making it necessary to clean the supports, with similar methods to those used to clean the cooking grids.

The use of the aforesaid brushes inevitably damages the glaze that protects the surface of the grid and of the supports, with the result that portions of the metal surface can lose the glaze cover and be thus subject to rust and corrosion, which make it necessary to replace the grid and the supports.

A further damage factor for the coating of the surface of the grid and of the supports is the heat to which the grid and the supports are subjected during cooking of foodstuffs that, together with the presence of acid substances in the foods being cooked, can produce, over time, damage caused by thermal stress and corrosion of the coating.

One object of the present invention is to provide a product for coating metal surfaces, in particular a product that is usable for coating the surface of a grid for cooking foodstuffs and for coating supports for cooking receptacles, which enables a coating to be obtained that covers evenly the entire surface of the grid and of the supports without leaving zones, even microscopic zones, devoid of coating, and which has non-stick characteristics, in particular with regard to organic substances coming from the cooking of foodstuffs, so as to enable "gentle" cleaning of the grid and of the supports, for example simply using a cloth or a sheet of paper, which does not damage the coating, without having to resort to the use of abrasive cleaning instruments and/or aggressive detergent substances. The product according to the invention must further provide the coating with greater resistance to corrosion and wear.

The objects of the invention are achieved with a product according to claim 1.

Owing to the invention it is possible to obtain a coating of a metal surface, in particular a coating of a metal grid for cooking foodstuffs and of supports for cooking receptacles that is uniform over the entire surface of the grid and of the supports, which can be cleaned without using abrasive instruments and/or aggressive detergent substances and which has greater resistance to repeated thermal stress and corrosion.

Further features and advantages of the invention will be clear from the following description that is provided by way of non-limiting example.

The product according to the invention consists of a glaze for glazing metal surfaces mixed with an additive consisting of nanoparticles of metal oxides, i.e. particles having a dimension comprised between a few nanometres and a few hundred nanometres. The glaze is preferably a vitrified glaze, in particular a vitrified glaze for foodstuffs, a glaze with which foodstuffs to be cooked can come into contact, without contamination of the foodstuffs occurring.

The nanoparticles have special properties that differ greatly from the properties that the materials that make up the nanoparticles show on the macroscopic scale. Such properties are connected to certain physical parameters such as dimension, morphological distribution and the phase, and are attributable to the quantistic dimension in nanoaggregates, the high surface-volume ratio and the great percentage of reactive atoms/molecules present on the surface.

The additive consists of a water dispersion of nanoparticles of at least one metal oxide with a chemical formula MeOₓ, in which Me is a metal, O the oxygen and x the number of atoms of oxygen in the oxide.

Metal oxides that are suitable for making the water dispersion are, for example Al₂O₃; SiO₂; ZrO₂.

It is also possible to make the additive as a water suspension of a mixture of nanoparticles of at least two of the aforesaid metal oxides.

The dimension of the nanoparticles is comprised between about 5 nm and about 100 nm. The percentage in weight of the nanoparticles in the water dispersion can vary between about 5% and about 40%.

The water dispersion of nanoparticles is mixed with the dry part of the glaze in a quantity that is such that the ratio between the weight of the water solution and the weight of the dry part of the glaze is comprised between about 0.005 and about 0.05.

When the product according to the invention is applied to a metal surface, for example to the surface of a metal grid for cooking foodstuffs, or of a support for cooking receptacles, the nanoparticles inside the glaze seal the microstructures present on the metal surface and cover zones that the glaze alone would not succeed in covering because it consists of microparticles, i.e. of particles of dimensions that are a thousand times greater than the dimensions of the nanoparticles. This effect enables the product according to the invention to stick better to the metal, for example to the cast iron with which a grid for cooking foodstuffs, or a support for cooking receptacles is normally made, and makes it possible to make a highly uniform coating without zones, even of microscopic dimensions, devoid of coating. A coating made with the product according to the invention has greater resistance to wear than a coating made using only a glaze. Further, as the surface of the metal is covered in a more complete and uniform manner, the presence of points is avoided more from which possible corrosion may spread.

Owing to the better covering of the metal surface, together with bonding properties due to the presence of the nanoparticles dispersed in the glaze, a coating made by using the product according to the invention has great hydrophobicity. This property enables the fluids present on the surface of the coating to slide more easily, substantially reducing the formation of encrustations. In particular, in the case of a grid for cooking foodstuffs and of a support for cooking receptacles the possibility is substantially reduced that the fluids coming from cooking foodstuffs and from possible seasonings on the foods may stick to the grid or to the support and form, together with particles of the foodstuffs themselves, solid residues sticking persistently to the surface of the grid, or of the support, thereby making possible cleaning without the use of abrasive instruments and/or aggressive detergent substances that may damage the coating of the grid and of the support.

The percentage of nanoparticles and the weight ratio of the water solution of nanoparticles and of the dry part of the glaze indicated above have been selected by the applicant so as to obtain surprisingly a coating with the aforementioned features of great resistance to corrosion and hydrophobicity, with minimum use of nanoparticles, and, consequently, with a significant reduction of the cost of the coating.

## Claims

1. Product for coating metal surfaces comprising a glaze for metal surfaces and an additive of said glaze consisting of a water dispersion of nanoparticles of at least one metal oxide, **characterised in that** said water dispersion contains a percentage in weight of said nanoparticles comprised between about 5% and about 40% and that the ratio between the weight of the water dispersion of nanoparticles and the weight of the dry part of the glaze is comprised between about 0.005 and about 0.05.

2. Product according to claim 1, wherein said at least one metal oxide is selected from a group of metal oxides comprising Al₂O₃; SiO₂; ZrO₂.

3. Product according to claim 1, or 2, wherein said additive consists of a water dispersion of nanoparticles of at least two metal oxides.

4. Product according to any preceding claim, wherein said glaze for metal surfaces is a vitrified glaze.

5. Product according to claim 4, in cui said vitrified glaze is a vitrified glaze for foodstuffs.

6. Product according to any preceding claim, **characterised in that** it is usable for making a coating of a grid for cooking foodstuffs and/or of supports for cooking receptacles.

7. Metal grid, in particular for cooking foodstuffs, **characterised in that** the surface of the grid is equipped with a coating made with the product according to claims 1 to 5.

8. Support for cooking receptacles, **characterised in that** the surface of the support is equipped with a coating made with the product according to claims 1 to 5.
